(19)

**Europäisches Patentamt**
**European Patent Office**
**Office européen des brevets**

(11) **EP 4 659 995 A1**

(12) **EUROPEAN PATENT APPLICATION**

(43) Date of publication:
**10.12.2025 Bulletin 2025/50**

(21) Application number: **24179606.9**

(22) Date of filing: **03.06.2024**

(51) International Patent Classification (IPC):
*B60L 53/20* (2019.01)   *B60L 53/63* (2019.01)
*B60L 53/68* (2019.01)   *B60L 58/10* (2019.01)
*H02J 1/14* (2006.01)

(52) Cooperative Patent Classification (CPC):
**B60L 53/63; B60L 53/20; B60L 53/68; B60L 58/10; H02J 1/14;** B60L 2240/62; B60L 2260/50

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **CSEM Centre Suisse d'Electronique et de Microtechnique SA  - Recherche et Développement**
**2002 Neuchâtel (CH)**

(72) Inventors:
• **ACHI, Diya**
  **1003 Lausanne (CH)**
• **ALET, Pierre-Jean**
  **2000 Neuchâtel (CH)**
• **CARRILLO RANGEL, Rafael**
  **1020 Renens (CH)**

(74) Representative: **Patentsmith SA**
**Bahnhofstrasse 87**
**3232 Ins (CH)**

(54) **METHOD FOR CONTROLLING THE CHARGING OF A PLURALITY OF ELECTRIC VEHICLES**

(57)    Method of coordinating electrical charging of $N$ electric vehicles (7) and a number of charging stations (5) connected to $M$ electrical substations 3 on an electric distribution network operated by a grid operator 9, wherein each of said $N$ electric vehicles is equipped with

- an electric battery (7a) having a maximum capacity and a state of charge;
- a charging interface (7b) adapted to charge said electric battery (7a) from one of said charging stations (5);
- a geolocation system (7c) adapted to determine a geographic position of said electric vehicle (7);
- a mobile data communication interface (7d);
- an application programming interface (7e) adapted to communicate with a processing unit (11), via said mobile data communication interface (7d), said geographic position, said state of charge, a binary status variable corresponding to whether or not said charging interface is connected to a charging station, and if so, a charging power rate, said application programming interface (7e) also being adapted to receive commands from said processing unit (11) to modify said charging power rate;

wherein said processing unit (11) receives control signals from said grid operator (9) relating to power limits for said $M$ electrical substations based on the condition of the electric distribution network;
and wherein said processing unit (11) comprises a forecasting module (11a) which predicts the charging needs and charging locations of said $N$ electric vehicles at a predetermined future timestep based on past behavior and current behavior of said electric vehicles (7), and commands each of the said electric vehicles (7) which is connected to a charging station (5) to vary its charging power if required, on the basis of said prediction of said charging needs and said power limits.

Figure 1

## Description

### Technical Field

The present invention relates to the field of supplying power to electric vehicles. More particularly, it relates to a method of controlling the charging of a plurality of electric vehicles so as to minimizes grid congestion on the electric distribution network from which they draw power.

### State of the Art

The electrification of mobility is characterized by a widespread adoption of electric vehicles (EV's), which offers promising opportunities as a sustainable alternative to traditional fuel-powered vehicles. However, this rapid adoption also poses big challenges on the electrical grid. The increased demand for electricity creates a strain on the network, especially during peak charging times. The traditional approach to compensate for this calls for physical reinforcement of the power distribution infrastructure. Nevertheless, the exploitation of EV's' energy storage capacity as flexible assets allows their smooth integration in the grid and the management of possible grid congestion. Congestion management is a type of flexibility service where the participating assets modulate their energy demand and/or shift their usage patterns from high to low grid congestion periods of the day, to avoid overloading transformers and powerlines.

Existing solutions typically focus on controlling the individual charging stations rather than the EV's themselves, as discussed in A. S. Al-Ogaili et al., 'Review on Scheduling, Clustering, and Forecasting Strategies for Controlling Electric Vehicle Charging: Challenges and Recommendations', IEEE Access, vol. 7, pp. 128353-128371, 2019, doi: 10.1109/ACCESS.2019.2939595.

M. M. Hoque, M. Khorasany, R. Razzaghi, M. Jalili, and H. Wang, 'Network-Aware Coordination of Aggregated Electric Vehicles Considering Charge-Discharge Flexibility', IEEE Transactions on Smart Grid, vol. 14, no. 3, pp. 2125-2139, May 2023, doi: 10.1109/TSG.2022.3204761 and M. Secchi, G. Barchi, D. Macii, and D. Petri, 'Smart electric vehicles charging with centralised vehicle-to-grid capability for net-load variance minimisation under increasing EV and PV penetration levels', Sustainable Energy, Grids and Networks, vol. 35, p. 101120, Sep. 2023, doi: 10.1016/j.segan.2023.101120 both consider grid aware systems for coordinating the charging of EV's, but the EV's have a fixed charging point in the network which is a very limiting and unrealistic assumption, particularly given that, in reality, many vehicles will be charged at multiple locations on a regular basis (e.g. home, workplace, public charging points etc.)

US9043038B2 discloses a method for aggregating electric power flow between an electric grid and electric vehicles for controlling EV's charging patterns with prediction capabilities to respond to grid requests regarding charging, discharging and other grid functions, but this solution is charging-station-centric and it does not take into account the fact that EV's move and can change their charging location. This method is hence very inflexible and based on unrealistic assumptions.

Documents DE102021105460A1, DE102018207043A1, FR3122951A1 and US2022410750A1 propose solutions with predictive and aggregation capabilities, but do not consider the locations of the charging points and hence cannot take into account the local state of the grid to manage the charging.

Solutions that aim at reducing the load on the supply network at transformer substation level are also present in the literature. Document EP2465177B1 considers a solution to control charging stations grouped by the same transformer/substation to reduce (i.e. to limit) the load on the supply network. However, this solution is centered on the charging stations and not on a group of EV's. Document WO2020260615A1 presents a solution to control a group of EV's grouped by the same transformer by allowing the charge of a new EV only if the peak power of the transformers has not been reached.

However, this solution cannot consider several substations and that the EV's can move and change their charging point.

An object of the present invention is hence to at least partially overcome the limitations of the prior art, and thereby to propose a method of controlling electrical charging of $N$ electric vehicles, which at least partially overcomes some of the drawbacks of the prior art.

### Disclosure of the Invention

More precisely, the invention relates to a method of controlling electrical charging of $N$ electric vehicles (i.e. a plurality of electric vehicles) and a number of charging stations connected to $M$ electrical substations (where $M \geq 1$) on an electric distribution network operated by a grid operator.

Each of said N electric vehicles (EV's) is equipped with:

-    an electric battery having a maximum capacity and a state of charge (SOC);

- a charging interface adapted to charge said electric battery from one of said charging stations;
- a geolocation system such as GPS or similar adapted to determine a geographic position of said electric vehicle;
- a mobile data communication interface such as 4G, 5G or similar;
- an application programming interface, typically implemented in software in said electric vehicle, adapted to communicate with a processing unit, via said mobile data communication interface, each of said geographic position, said state of charge, a binary status variable corresponding to whether or not said charging interface is connected to a charging station, and if it is indeed connected, a charging power rate (i.e. the rate at which said electric battery is taking power while charging), said application programming interface also being adapted to receive commands from said processing unit to modify said charging power rate.

Said processing unit receives control signals, for instance from said an aggregator, said aggregator being for instance said grid operator or a third-party interacting with the electric distribution network, these control signals relating to:

- power limits for said $M$ electrical substations based on the condition of the electric distribution network;

Said processing unit comprises a forecasting module which predicts the charging needs and charging locations of said $N$ electric vehicles (either individually or collectively, e.g. grouped by the most likely substation they will draw power from when charging) at a predetermined future timestep based on past behaviour and current behaviour of said electric vehicles, and commands each of the said electric vehicles which is connected to a charging station to vary its charging power if required, on the basis of said prediction of said charging needs and said power limits.

By these means, the processing unit only needs to communicate with the EV's and the grid operator or said third party, and on the basis of the information received can carry out the entire method of the invention. There is hence no need to communicate with individual charging stations, which may hence be of any type, nor is there any need to know the total load on any given substation: only the total load of the participating EV's is needed. The method is hence blind to the number of substations, number of participating EV's or other loads on the substations. The addition or removal of system elements (substations, EV's, charging points etc.) can be automatically taken into account and learned in real-time. Furthermore, the method does not require any specific hardware to be added to participating EV's, since the hardware used is standard, and the application programming interface can be implemented in software and simply uploaded into the EV's existing control systems. As a result, it can easily be implemented with essentially no specific hardware, and provides excellent results.

Advantageously, said processing unit also receives control signals from an aggregator (who may be the grid operator or a distinct entity) relating to power requests to increase or decrease said charging rate of said N electric vehicles, these power requests either coming from the grid operator said third-party interacting with the electric distribution network, and wherein said forecasting module also takes into account said power requests. As a result, some or all of the EV's may be requested to draw charging power at a lower rate to avoid grid congestion, or if a surplus of power is available (e.g. due to intermittent renewable energy sources such as wind or solar power being on the grid in excess), to take power at a higher rate than they would if not instructed. This permits greater flexibility in balancing the power flows on the electric distribution network.

Advantageously, said processing unit predicts the charging needs and charging locations (either at the level of individual charging stations, or by the cluster of charging stations served by a given substation) of each of said $N$ electric vehicles individually, giving very accurate predictions.

Advantageously, said charging locations are determined at the level of which of said $M$ substations will supply power to each of said $N$ electric vehicles which are predicted to charge during said future timestep. This clustering of information leads to overall accuracy in the predictions and is light on computational needs.

Advantageously, said processing unit predicts the charging needs and charging locations of said $N$ electric vehicles at said predetermined future timestep via a forecast model comprising a discrete probabalistic model which predicts said binary variable for said future timestep on the basis of said past behaviour and current behaviour, and a continuous probabalistic model forecasting said charging needs and said charging locations on the basis of said predicted binary variable and said past behaviour and current behaviour. This has shown in simulations to give excellent results.

Advantageously, said discrete probabilistic model forecasts said binary variable on the basis of at least one of: a hidden Markov model, neural stochastic differential equations (SDE) or a transformer.

Advantageously, said continuous probabilistic model forecasts said charging needs and said charging locations on the basis of at least one of: a linear autoregressive model, a support vector regression model, a transformer or a recursive neural network such as a long-short-term memory network.

Advantageously, the state of charge of the battery of each of said $N$ electric vehicles is predicted for said future timestep.

Advantageously, said location of each of said electric vehicles is predicted on the basis of the area served by the charging stations drawing power from each of said substations. Finer-level detail is not needed, which simplifies processing.

Advantageously, each of said electric vehicles can have one of the following states:

1. Unplugged - driving;
2. Unplugged - parked;
3. Plugged - charging;
4. Plugged - charging completed;

said forecasting module determining a probability of each of said electric vehicles changing from its current state to another state during said predetermined timestep.

## Brief Description of the Figures

Further details of the invention will become apparent upon reading the detailed description, in reference to the following figures, in which:

- Figure 1 illustrates schematically a system for implementing the method of the invention;
- Figure 2 represents schematically an electric vehicle adapted for use with the method of the invention;
- Figure 3 illustrates schematically block diagram of the principle of the control system used with the method of the invention;
- Figure 4 illustrates schematically a block diagram of an example of a forecasting model for use with the method of the invention; and
- Figure 5 illustrates results for the percentage of time the state of charge of EV's is above 20% as modeled for the method of the invention, for no control, and for a simple control paradigm.

## Embodiments of the Invention

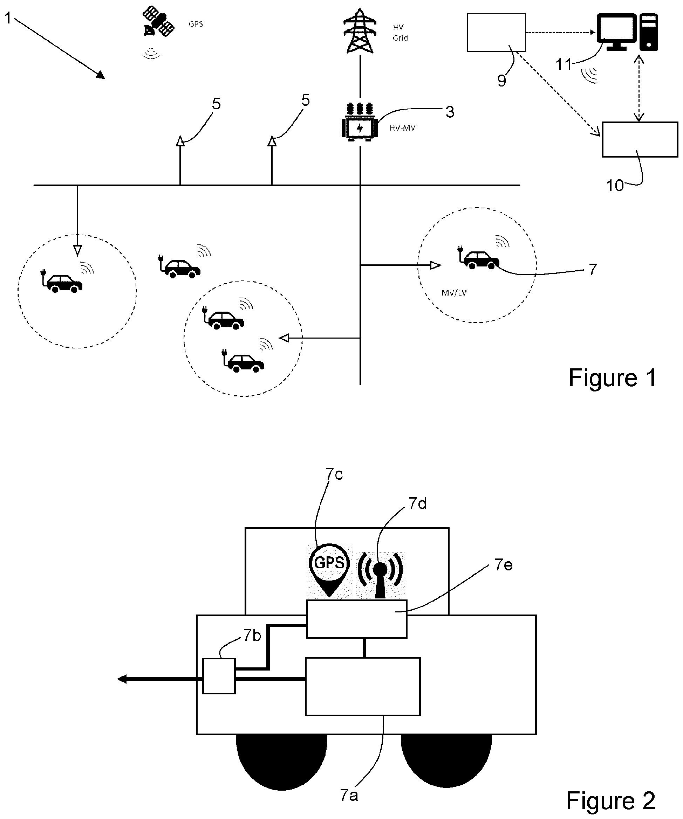

Figure 1 illustrates schematically the components of a system 1 for implementing the method of the invention.

This system 1 comprises an electrical distribution network comprising $M$ substations 3 (where $M$ is at least 1), each of which supplies electricity to a number of charging stations 5 for electric vehicles (EV) 7. Only one substation 3 has been illustrated, but the method of the invention is scalable to any number of $M$ substations 3 located in a geographic area, the charging stations 5 served with electrical power by any particular substation 3 being referred to in the following as a "cluster".

The electrical distribution network is operated by a grid operator 9, as is generally known and who typically operates the electrical distribution network (also referred to as the "grid"), and the processing used in the method is carried out by a processing unit 11, which may be in a single location or may be distributed in a cloud computing solution. The processing unit 11 is adapted to communicate with the grid operator 9, with an aggregator 10 (who may be the grid operator or a third party interacting with the electrical distribution network), and also with the EV's 7, the number of participating EV's being $N$ (where $N$ is greater than 1). Processing unit 11 may also be operated by the grid operator 9 and/or the aggregator 10.

As illustrated in figure 2, each participating EV 7 is provided with:

- an electric battery 7a having a maximum capacity and a state of charge (SOC);
- a charging interface 7b adapted to charge said electric battery from said electric distribution network via charging stations 5;
- a geolocation system 7c, such as GPS or similar, adapted to determine a geographic position of each respective EV;
- a mobile data communication interface 7d, such as a conventional mobile telephony data connection using 4G, 5G or similar technology,
- an application programming interface 7e.

The physical components 7a, 7b, 7c and 7d are typically present in EV's 7 at the current time, and the application programming interface 7e can be simply uploaded into the EV 7's software as an executable application. No physical adaptation of the EV's 7 is hence necessary.

The application programming interface 7e carries out the EV 7 side of the method of the invention, and to this end, it is adapted to communicate, via said mobile data communication interface, with the processing unit 11. Within the EV 7, the application programming interface 7e is adapted to receive signals from the geolocation system 7c, from the electric battery 7a, from the charging interface 7b, and also to send commands to this latter in order to modify its charging rate, i.e. the rate at which it takes power from a charging station 5 to charge the battery 7a.

The information communicated from the EV 7 to the processing unit 11 includes, but is not necessarily limited to:

- the geographic position of the EV 7, e.g. in terms of latitude and longitude, map reference or similar;
- the state of charge of the battery 7a;
- whether or not said charging interface 7b is connected to said electric distribution network via a charging station 5;
- If the charging interface 7b is connected to the electric distribution network, the charging power rate.

Furthermore, the application programming interface 7e receives commands from the processing unit 11 to modify the charging power rate of the EV 7, if this is determined as being desirable by the processing unit 11.

Other information which may be used in the method are, for instance, the maximum battery capacity and maximum charging rate of each participating EV 7, and when a new EV 7 starts participating in the method, these data are transmitted to the processing unit 11.

It should be noted at this stage that no information regarding the individual charging stations 5 is necessary, the method functioning on the basis of information about the grid provided directly or indirectly by the grid operator 9 (via the aggregator 10 or not) and the participating EV's 7, as will become clearer below. This entirely avoids any potential incompatibility issues with charging stations 5, and the method can hence be entirely carried out with communication between the processing unit, the grid operator 9 and/or aggregator 10 (directly or indirectly) and the participating EV's 7.

The basic principle of the method of the invention relates to the fact that the pool of N participating EV's 7 which move mainly in a geographic area served by a group of M substations 3, with a sufficient level of predictability to be able manage the charging rates of the EV's 7 of the pool so as to be able to respond to congestion management requests (or constraints) from the grid operator 9 or said third party (which may pass via aggregator 10 if this is a distinct entity) and prevent overloading on the set of M substations 3 by dynamically limiting the peak power. The end result is that grid congestion can be reduced, without inconveniencing the EV 7 users.

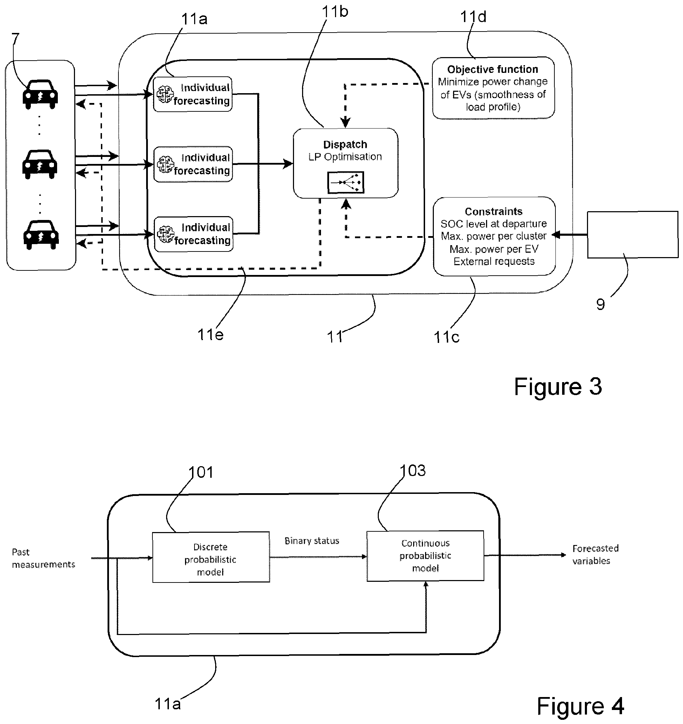

A block diagram of the principle of the control system is illustrated in figure 3, as implemented by the processing unit 11.

In this block diagram, each participating EV 7 is associated with a forecasting module 11a which feeds forecasts to a control algorithm module 11b, which takes into account the constraints within the system 1 (represented by block 11c), such as the maximum power that can be delivered by each substation 3 which can be taken by each EV 7, requests from the grid operator 9 or said third party (represented by the arrow from block 9 to block 11c), as well as objective constraints (represented by block 11d) such as a desire to minimize the power change of the EV's 7 (i.e. the smoothness of the load profile), in order to send signals to the EV's 7 instructing them to adjust their charging power if required. The forecasting is advantageously carried out for each individual EV 7, though this is not obligatory, and a combined forecast is also possible.

The forecasting modules 11a and the control algorithm module 11b together form part of a control system 11e, hosted by the processing unit.

The forecasting modules 11a collect past data from each EV 7 and stores them in a database. Based on past and current data, the forecasting module 11a makes a forecast of key "state" variables of each EV 7. The module takes as input past data for a predefined time interval (e.g., 2 or 24 hours prior the forecasting time) of at least:

- location (e.g. longitude and latitude);
- SOC; and
- a binary status variable that indicates whether the EV was plugged in or unplugged.

For each EV 7, at least the following variables are forecasted:

- location, either as latitude and longitude coordinates or a cluster of charging stations 5 associated with a specific substation 3 in which the EV 7 in question is predicted to charge,
- SOC; and
- a binary status variable that indicates whether the EV 7 is plugged in to a charging station 5 or unplugged.

These variables are forecasted over a predefined horizon of H discrete time steps ahead (e.g. 72 steps if a prediction horizon of 6 hours is considered with a resolution of 5 minutes, though any suitable number of steps and any suitable prediction horizon can be used) using probabilistic machine learning methods. Each forecast is passed to the control algorithm module 11b.

The control algorithm module 11b is based on a machine learning approach, preferably a model predictive control (MPC) approach, and it takes as inputs the forecasted trajectories of the selected variables for each EV 7 from the forecast module (i.e. at least location, SOC and the binary status variable), as well as inputs signals from the grid operator that controls the M substations 3 of interest relating to requests to absorb more or less power at any given time in the present or future, or from said third party monitoring the grid.

The main advantage of an MPC approach is that it allows the output of the current timeslot to be optimized, while keeping future timeslots in account. This is achieved by solving an optimization problem across a predefined horizon of H discrete time steps ahead to dispatch optimal charging profiles for the EV's 7. Only the first step of the solution, i.e. the solution for the current time step, is sent to the EV's 7 to change their charging power if required to take more or less power than they would otherwise take if operating fully autonomously.

The optimization is repeated at regular or irregular intervals (e.g., every 5 minutes or according to any other suitable time step) with updated inputs based on the latest information provided by the application programming interfaces of the participating EV's 7.

The control problem may incorporate the following constraints to guarantee the functionality of the service in addition to end-users' satisfaction:

- Power limits, i.e. a maximum load, can be set for each of the *M* substations to fulfil the functional purpose of the solution, i.e. to reduce grid congestion. This is

- An external request, e.g. from the grid operator or from a third-party interacting with the electric distribution network to modulate the power taken by the pool of EV's 7 can be included as an optional additional feature of the solution, referred to as a "power request" to increase or decrease the charging rate of the *N* EV's 7.

- The forecasted value for the SOC of each EV 7 at the moment of disconnection from the charging station 5 may also be incorporated to ensure the comfort of the end-users.

- The maximum charging power for each EV 7 is specified to respect their physical constraints.

A more detailed, specific implementation of the forecasting modules 11a will now be discussed. This implementation, however, is nonlimiting and is provided purely as an example.

As noted above, a key element of the method of the invention is the forecasting models that predict dynamically when, where and how much the EV's 7 will be charged based on probabilistic machine learning models.

The models receive the inputs from the EV's 7 noted above, for a past horizon of e.g. 24 hours, though longer periods such as a week, several weeks, a month or even longer can be used to improve the predictive power. The models may also take into account the time of the day and the day of the week for both the past measurements and the future forecasting horizon.

The output of the of the module are the following variables for a forecasting horizon of H steps ahead:

- $q_{ik}$: the SOC at time k (in the forecasting horizon) for the *i*-th EV 7.
- $z_{ik}$: the location at time k (in the forecasting horizon) for the *i*-th EV 7. The location can be the latitude and longitude coordinates or the index of the substation 3 from which the EV 7 is likely to take power when charging at time *k*.

A block diagram of an example of the forecasting model 11a is depicted in Figure 4, and comprises a discrete probabilistic model block 101 feeding a continuous probabilistic model block 103 which combines the output of the discrete probabilistic model block 101 with the past measurements and outputs forecasted variables.

The discrete probabilistic model 101 block takes the past measurements and predicts the binary status variable that indicates if the EV 7 under consideration is plugged in or unplugged. Nonlimiting examples of models to forecast said binary status variable are: hidden Markov models, neural stochastic differential equations (SDE) and transformers.

The continuous probabilistic model block 103 takes the past data and the forecasted binary status variable to forecast the SOC and the location (i.e. which substation 3 the EV 7 is likely to be drawing charging power from if/when it next connects to a charging station 5) for the forecasting horizon. Nonlimiting examples of models for the continuous variables are: linear autoregressive models, support vector regression models, transformers and recursive neural networks such as long-short-term memory (LSTM) networks. The models can forecast the desired variables independently for each EV or can jointly forecasts all EV's' variables at once.

The models used in the model blocks 101 and 103 learn the charging patterns from historical data in a training phase. Typically, these models take historical data from two to 12 months to learn the charging behaviors of the individual EV's 7. The discrete probabilistic model 101 can be pretrained with a fraction of the training dataset and later used in the training of the continuous model 103 using the rest of the training data. An alternative solution is to have an end-to-end learnable model that learns all parameters of both the discrete model 101 and the continuous model 103 at the same time. Furthermore, in the absence of a specific training phase, the models can simply work on the basis of data as it is acquired by a participating EV 7. This is particularly the case when a new charging station 5, substation 3 or EV 7 is added into the system 1, and an advantage of the approach of the invention is that the methodology takes this addition, or indeed subtraction, into account automatically, and rapidly learns the new overall behaviour of the system 1 and/or the added element. Naturally, removal of an element is automatically accounted for in the same manner.

The processing unit 11 hence The system aggregates the location forecasts for the individual EV's and computes the sets $N_{ck} := \{i|i$ - *th EV 7 is connected to substation c*$\}$, i.e., the set of EV's connected to substation c at time k (in the forecasting horizon). Having these sets allows the control algorithm module 11b to dynamically control (limit) the power per substation 3 at every time k in the forecasting horizon.

To go further into details, suppose we have a set of *N* EV's 7 in the pool of assets under control of the method of the invention and these EV's 7 move mainly in a geographical area served by *M* substations (i.e. an area containing *M* substations at which the EV's 7 may charge). The overall objective of the control algorithm module 11b is to dispatch the charging profile for each EV 7 such that the pool of assets can respond to congestion management requests (or constraints) set by the grid operator 9 and prevent overloading on the set of *M* substations.

Each EV 7 has one of four possible statuses:

1. Unplugged - driving;
2. Unplugged - parked;
3. Plugged - charging;
4. Plugged - charging complete.

Thus, at time *k,* an EV 7 can be at substation *j, j* ∈ {1, ..., *M*} with status *i, i* ∈ {1, 2, 3, 4}, where 1, 2, 3 and 4 refer to the numbering of statuses as above.

The 4 statuses and *M* substations can be combined into a set 4*M* possible states for each EV 7, i.e., the product set {1, ..., M} × {1, 2, 3, 4}.

With this enlarged set of states, a Markov model (Markov chain) can be used to learn the probability distribution of transitioning from one state to another, e.g., Unplugged - driving in an area meaning that it is likely to connect to a charging station served by substation *j* (status 1) to Plugged - charging completed at a charging station served by substation *j* (status 4). The probability distribution is encoded in a transition matrix $A_h \in \mathbb{R}^{4M \times 4M}$, where the subscript *h* denotes the dependency of the transition distribution on the hour of the day, i.e., *h* ∈ {0, ..., 23}. Each entry of this matrix denotes the probability of transition from state i to state j, i.e.

$$[A_h]_{ij} = P(S_{k+1} = j | S_k = i),$$

where $S_k$ denotes the state at discrete time *k*. Typically, two months of data is used to train the Markov model for each EV 7, although any convenient period can be used.

To forecast the state trajectory $S_{t+1}, ..., S_{t+H}$ for *H* time steps in the future, we use the state at current time *t, $S_t$,* and the transition matrix $A_h$ to draw *R* realizations (e.g., 100 realizations) of the trajectories. Based on these *R* trajectories, an average trajectory is computed as the most likely trajectory for each timestep $S_{t+1}, ..., S_{t+H}$.

Once the probable state trajectory is computed, the states are fed to a neural stochastic differential equation (SDE) model (or other suitable model) to forecast the SOC trajectory. The neural SDE has the form:

$$Q_{t+1} = Q_t + f_t \Delta t + \sigma_t \Delta W_t,$$

where $Q_t$ denotes the SOC at time *t* and:

- $f_t = f_\theta(t, S_t, Q_t, E_t)$ denotes a multi-layer perceptron (MLP) neural network with parameters $\theta$, that computes the deterministic drift of SOC with inputs *t, $S_t$, $Q_t$,* E$_t$;
- $\sigma_t = \sigma_\theta(t, S_t, Q_t, E_t)$ denotes an MLP with parameters $\theta$, that computes the stochastic drift of the SOC with inputs *t, $S_t$, $Q_t$, $E_t$;*
- $\Delta W_t$ is a white noise term normally distributed;
- $\Delta t$ is a continuous time step (e.g., 5 minutes step);
- $E_t$ denotes exogeneous inputs at time *t,* such as encodings of the time of the day, and day of the week.

The neural SDE model is used to forecast the SOC sequence $\{S_k\}$ for the horizon *k* = t + 1, ..., *t* + *H.* The model is typically trained from 1 year of data for each EV to learn the charging patterns, although this does not have to be the case.

The forecasting model 11a outputs the sequences $\{Q_k\}$ (SOC) and $\{S_k\}$, (a combined sequence of position and status), for the prediction horizon *k* = t + 1, ..., *t* + *H.*

Based on these predicted sequences, the system aggregates the location forecasts for the individual EV's and

computes the sets $\mathcal{N}_{ck} := \{i \mid i\text{-}th\ EV\ is\ in\ an\ area\ served\ by\ substation\ c\}$, i.e., the set of EV's connected to substation c at time k in the forecasting horizon. Having these sets and the desired SOC allows the control algorithm implemented by the processing unit 11 to dynamically control (i.e. to limit) the power drawn by the EV's 7 at each substation 3 at every time *k* in the forecasting horizon.

The optimal charging dispatch can be carried out using an MPC approach by solving an optimization problem at every discrete time *t* (e.g., at time steps of 5 minutes) for a horizon of *H* time steps in the future (e.g., 72 steps if a horizon of 6 hours ahead is considered in steps of 5 minutes), although only the solution for the next timestep is acted upon and sent to the control algorithm module 11b, after which this process is repeated for the subsequent timestep and the *H* - 1 timesteps after that in order to take into account the entire new horizon of *H* time steps.

Suppose we want to compute the charging profiles at time *t*. Let $x_i \in \mathbb{R}^H$ denote the charging power profile for the *i*-th EV 7 in the pool of participating EV's 7, $i = 1, ..., N$, in the optimization horizon $k = t + 1, ..., t + H$ such that $x_{ik}$ denotes the charging power of the *i*-th EV 7 at time *k*. Suppose we have the following linear model to simulate the evolution of the SOC of the *i*-th EV 7:

$$s_{ik} = \alpha_i s_{ik-1} + \beta_i x_{ik}.$$

In the model, $s_{ik}$ is the SOC at time *k*, $\alpha_i$ is a coefficient modelling the losses (with a value of 1 if an ideal Coulomb count model is used) and $\beta_i$ denotes a charging conversion coefficient defined as:

$$\beta_i = \eta_i \frac{\Delta t}{C_i},$$

that considers the battery capacity, $C_i$, the charging time, $\Delta t$, and the charging losses $\eta_i$ (which ideally has a value of 1). The forecasting module computes forecasts of the desired SOC at time k for each EV *i*, $q_{ik}$, and the sets $\mathcal{N}_{ck}$ that represents the set of EV's 7 that are connected to substation *c* at time *k*.

The optimal dispatch problem can be formulated as a linear program of the form:

$$\min_{x_1,...,x_N,d_1,...,d_N} \sum_{i=1}^{N} \sum_{k=t+1}^{t+H} d_{ik}$$

subject to:

$$\sum_{i \in \mathcal{N}_{ck}} x_{ik} \le b_{ck}, \ c = 1, ..., M, \ k = t+1, ..., t+H,$$

$$-d_{ik} \le x_{ik} - x_{ik-1} \le d_{ik}, i = 1, ..., N, k = t+1, ..., t+H,$$

$$\sum_{i=1}^{N} x_{it+1} = r,$$

$$s_{ik} = \alpha_i s_{ik-1} + \beta_i x_{ik} - \beta_i y_{ik}, \ i = 1, ..., N, k = t+1, ..., t+H,$$

$$q_{ik} \le s_{ik} \le u_{ik}, i = 1, ..., N, k = t+1, ..., t+H,$$

$$0 \le x_{ik} \le p_{ik}, i = 1, ..., N, k = t+1, ..., t+H.$$

$$d_{ik} \geq 0, i = 1, \ldots, N, k = t + 1, \ldots, t + H.$$

In the problem above, the objective is to find the smoothest (in a total variation sense) charging power profiles $x_{ik}$ for all EV's 7 in the prediction horizon such that the constraints regarding grid congestion, total power drawn etc. are met. To pose the problem as a linear program, we introduce the slack variables $x_{ik}$ (which has a positive value) and the second constraint that bounds the power change between times $k$ and $k$ - 1 by the slack variables such that by minimizing the sum of all slack variables we find the smoothest charging profiles. The first constraint aims at limiting the total power drawn by a substation 3, where $b_{ck}$ denotes the maximum power of the pool of EV's connected to substation c at time $k$. The values $b_{ck}$ are inputs from the grid operator 9 (or a third-party interacting with the electrical distribution network) and can be static or dynamically updated at every time step. The third constraint is an optional constraint that is only active if we receive a power request $r$ for the total pool of EV's 7, e.g., from the grid operator or said third party. The fourth and fifth constraints aim at keeping the SOC $s_{ik}$ between desired bounds $q_{ik}$ and $u_{ik}$ at time $k$, where $y_{ik}$ denotes the discharge power that simulates the usage when the EV is not plugged in, e.g. the power used for driving, heating etc. The lower bounds $q_{ik}$ are taken from the SOC forecasts from the forecasting module 100. The upper bound $u_{ik}$ might be 1 (i.e., fully charged) or a preferred charge limit agreed by the user. Constraints on the maximum charging power rate of the $i$-th EV 7 at time $k$ are represented by $p_{ik}$. The charging rate might vary in time if the maximum power rate of the charger is smaller than the maximum rate of the EV 7. A possible variation is to include a lower bound constraint also on the power rate to set a minimum desired rate to ensure EV's 7 are always charged when plugged in.

Another possible implementation is solve the following feasibility problem:

$$find\ \boldsymbol{x}_1, \ldots, \boldsymbol{x}_N$$

Subject to:

$$\sum_{i \in \mathcal{N}_{ck}} x_{ik} \leq b_{ck}, \ c = 1, \ldots, M, \ k = t + 1, \ldots, t + H,$$

$$\sum_{i=1}^{N} x_{it+1} = r,$$

$$s_{ik} = \alpha_i s_{ik-1} + \beta_i x_{ik} - \beta_i y_{ik}, \ i = 1, \ldots, N, k = t + 1, \ldots, t + H,$$

$$q_{ik} \leq s_{ik} \leq u_{ik}, i = 1, \ldots, N, k = t + 1, \ldots, t + H,$$

$$0 \leq x_{ik} \leq p_{ik}, i = 1, \ldots, N, k = t + 1, \ldots, t + H.$$

Since all constraints are convex, the problem described above can be solved e.g. by using the projection onto convex sets algorithm (also known as the alternating projection method) or the average projections algorithm.

In another implementation, the control problem can be solved just for the next discrete time step, i.e., $H = 1$. In this case the problem can have the alternative formulation as a quadratic programming problem with $k = t + 1$:

$$\min_{x_1, \ldots, x_N} \frac{1}{2} \left( \sum_{i=1}^{N} x_{ik} - r \right)^2$$

Subject to:

$$\sum_{i \in \mathcal{N}_{ck}} x_i \leq b_{ck}, \ c = 1, \ldots, M,$$

$$s_{ik} = \alpha_i s_{ik-1} + \beta_i x_i - \beta_i y_{ik}, \; i = 1, \ldots, N,$$

$$q_{ik} \leq s_{ik} \leq u_{ik}, i = 1, \ldots, N,$$

$$0 \leq x_i \leq p_{ik}, i = 1, \ldots, N.$$

This control strategy is a faster alternative since the prediction horizon is just one time step in the future thus posing a smaller optimization problem. The problem will find the charging rates for all EV's 7 such that they meet the SOC constraints and the power limit constraints for all substations and additionally the total aggregated power is the closest possible to the requested power from the grid operator or said third party.

The main differences of the present invention with respect to the state of the art are that it considers that the EV's 7 move over a geographical area, it considers the links between substations 3, and it predicts dynamically when, where and how much the participating EV's 7 will be charged in order to anticipate to future needs both from the grid and the users. As opposed to other solutions that need to predict the total load of a substation 3, the present invention just needs to predict the load due to the EV's served by said substation 3.

Furthermore, the methodology of the invention:

- Is blind to number of substations, EV's 7, non-participating EV's, etc.
- Accounts for addition, removal of charging points 5, substations 3 and EV's 7 automatically as the system learns.
- Is only based on info that's from EV's 7 and grid operator 9 or said third party, not individual charging stations 5.
- Will function with any charging stations 5 since no communication is required therewith.

An example of a simulation of the full control solution according to the invention (i.e. including both forecasting and optimization) is described in the following. The simulated pool consisted of 1000 EV's 7 located in a locality in a city served by 150 substations 3. The charging patterns and displacement were simulated for two weeks for three types of EV's 7 (small, medium and large size with battery capacities of 60 kWh, 90 kWh and 110 kWh, respectively). The control solution was used to control the charging profiles of the EV's 7 of the pool with two objectives: 1) limit the total power per substation, and 2) peak shaving at critical hours, i.e., to reduce the aggregated power profile of the whole pool of EV's 7 to meet flexibility requests from the grid operator or said third party.

The power upper limits per cluster were computed as the 90% percentile of the observed aggregated power over one month. The power requests from the grid operator or said third party were sent at peak power times every day to reduce by 20% the peak value with a duration of 30 minutes.

The performance of the control solution was evaluated in terms of three key performance indicators (KPI): customer satisfaction, where the mean percentage of time the SOC is above 20% (MPTSOC), substation constraint violation, where the mean percentage of time the substation's power satisfy the constraints (MPTCS), and, the request satisfaction, where the mean absolute percentage error (MAPE) between the requested power and the delivered power is measured. The solution of the invention was compared against two different control strategies: 1) no control, i.e., the EV's 7 charge when they need at the rate they need without taking into account the needs of the grid, 2) simple control, where a binary control signal is triggered if there is a violation on the aggregated power per substation and subsequently the charging power rate of all EV's connected to a given substation 3 is throttled to a fixed maximum rate of 4.5 kW for each EV 7 whenever the aggregated power at the substation 3 providing power goes above a predetermined threshold. The results of the comparison are reported in the following table:

| KPI | No control | Simple control | Invention |
|---|---|---|---|
| MPTSOC (%) | 100 | 92 | 99 |
| MPTCS (%) | 96 | 100 | 100 |
| MAPE (%) | NA | NA | 5.9 |

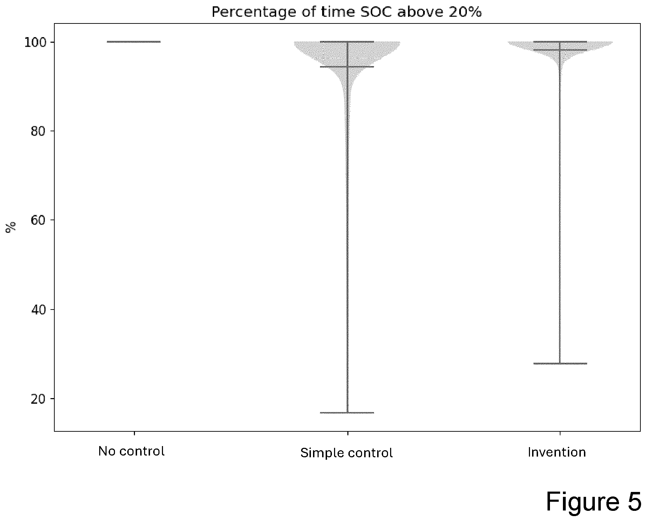

Looking at these results in the context of figure 5, which shows the distribution of the MPTSOC of the EV's 7 for the different control strategies, it can be seen that although no control maximizes user comfort in that MPTSOC is 100%, this comes at the cost of a relatively low MPTCS. Simple control, on the other hand, optimizes the grid's needs with an MPTCS for 100%, at the cost of poor MPTSOC and hence reduced user comfort. The method of the invention, on the other hand, manages to satisfy the grid with an MPTCS of 100%, with vastly improved MPTSOC compared to simple control, only trivially below that obtained with no control, which by definition prioritizes user comfort above all else.

This result is entirely unexpected, and represents a very advantageous optimization, enabling both the grid and the users to be satisfied at the same time.

Although the invention has been described in connection with particular embodiments, variations thereto are possible without departing from the scope of protection as defined in the appended claims.

**Claims**

1.  Method of controlling electrical charging of $N$ electric vehicles (7) and a number of charging stations (5) connected to $M$ electrical substations 3 on an electric distribution network operated by a grid operator 9,

    wherein each of said N electric vehicles is equipped with

    - an electric battery (7a) having a maximum capacity and a state of charge;
    - a charging interface (7b) adapted to charge said electric battery (7a) from one of said charging stations (5);
    - a geolocation system (7c) adapted to determine a geographic position of said electric vehicle (7);
    - a mobile data communication interface (7d);
    - an application programming interface (7e) adapted to communicate with a processing unit (11), via said mobile data communication interface (7d), said geographic position, said state of charge, a binary status variable corresponding to whether or not said charging interface is connected to a charging statoin, and if so, a charging power rate, said application programming interface (7e) also being adapted to receive commands from said processing unit (11) to modify said charging power rate;

    wherein said processing unit (11) receives control signals relating to power limits for said $M$ electrical substations based on the condition of the electric distribution network;
    and wherein said processing unit (11) comprises a forecasting module (11a) which predicts the charging needs and charging locations of said $N$ electric vehicles at a predetermined future timestep based on past behavior and current behavior of said electric vehicles (7), and commands each of the said electric vehicles (7) which is connected to a charging station (5) to vary its charging power if required, on the basis of said prediction of said charging needs and said power limits.

2.  Method according to the preceding claim, wherein said processing unit (11) also receives control signals from an aggregator (10) relating to power requests to increase or decrease said charging rate of said N electric vehicles (7), and wherein said forecasting module (11a) also takes into account said power requests.

3.  Method according to any preceding claim, wherein said processing unit (11) predicts the charging needs and charging locations of each of said N electric vehicles (7) individually.

4.  Method according to any preceding claim, wherein said charging locations are determined at the level of which of said $M$ substations (3) will supply power to each of said $N$ electric vehicles (7) which are predicted to charge during said future timestep.

5.  Method according to any preceding claim, wherein said processing unit (11) predicts the charging needs and charging locations of said $N$ electric vehicles (7) at said predetermined future timestep via a forecast model comprising a discrete probabilistic model (101) which predicts said binary variable for said future timestep on the basis of said past behavior and current behavior of each of said electric vehicles (7), and a continuous probabilistic model (103) forecasting said charging needs and said charging locations on the basis of said predicted binary variable and said past behavior and current behavior of said electric vehicles (7).

6.  Method according to the preceding claim, wherein said discrete probabilistic model (103) forecasts said binary variable on the basis of at least one of: a hidden Markov model, neural stochastic differential equations (SDE) or a transformer.

7.  Method according to one of claims 5 or 6, wherein said continuous probabilistic model (103) forecasts said charging needs and said charging locations on the basis of at least one of: a linear autoregressive model, a support vector regression model, a transformer or a recursive neural network such as a long-short-term memory network.

8.  Method according to any preceding claim, wherein the state of charge of the battery (7a) of each of said $N$ electric vehicles (7) is predicted for said future timestep.

9.  Method according to any preceding claim, wherein said location of each of said N electric vehicles (7) is predicted on the basis of the area served by the charging stations (5) drawing power from each of said substations (3).

10. Method according to any preceding claim, wherein each of said electric vehicles (7) can have one of the following states:

    1. unplugged - driving
    2. unplugged - parked
    3. Plugged - charging
    4. Plugged - charging completed

    and wherein said forecasting module determines a probability of each of said electric vehicles (7) changing from its current state to another state during said predetermined timestep.

Figure 1

Figure 2

11a   11b   11d

7

Individual forecasting

Individual forecasting

Individual forecasting

Dispatch
LP Optimisation

**Objective function**
Minimize power change
of EVs (smoothness of
load profile)

**Constraints**
SOC level at departure
Max. power per cluster
Max. power per EV
External requests

9

11e   11   11c

## Figure 3

101   103

Past
measurements

Discrete
probabilistic
model

Binary status

Continuous
probabilistic
model

Forecasted
variables

11a

## Figure 4

Figure 5

Europäisches
Patentamt
European
Patent Office
Office européen
des brevets

# EUROPEAN SEARCH REPORT

**Application Number**

EP 24 17 9606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/340889 A1 (APPELBAUM JASON [US] ET AL) 26 November 2015 (2015-11-26) | 1-10 | INV. B60L53/20 |
| Y | * figure 1 * <br> * paragraph [0025] - paragraph [0026] * <br> * paragraph [0028] * <br> * paragraph [0030] * <br> * paragraph [0047]; figure 8 * <br> * paragraph [0052] - paragraph [0056] * <br> * paragraph [0059] * <br> ----- | 1-10 | B60L53/63 B60L53/68 B60L58/10 H02J1/14 |
| Y | US 2012/286725 A1 (GULLAPALLI SUBHASH B [US] ET AL) 15 November 2012 (2012-11-15) <br> * figure 1 * <br> * paragraph [0004] - paragraph [0005] * <br> * paragraph [0038] * <br> * paragraph [0035] * <br> ----- | 1-10 | |
| A | US 2019/389314 A1 (ZHU ZHENGMAO [US]) 26 December 2019 (2019-12-26) <br> * figures 1-4 * <br> * paragraph [0053] - paragraph [0068] * <br> ----- | 1-10 | |

**TECHNICAL FIELDS SEARCHED (IPC)**

B60L
H02J

The present search report has been drawn up for all claims

| Place of search | Date of completion of the search | Examiner |
|---|---|---|
| The Hague | 8 November 2024 | Benedetti, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 9606

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2024

| Patent document cited in search report | | Publication date | Patent family member(s) | | Publication date |
|---|---|---|---|---|---|
| US 2015340889 | A1 | 26-11-2015 | CN | 106458050 A | 22-02-2017 |
| | | | DK | 3119638 T3 | 26-03-2018 |
| | | | EP | 3119638 A1 | 25-01-2017 |
| | | | US | 10756549 B1 | 25-08-2020 |
| | | | US | 11316359 B1 | 26-04-2022 |
| | | | US | 12081055 B1 | 03-09-2024 |
| | | | US | 2015266389 A1 | 24-09-2015 |
| | | | US | 2015340889 A1 | 26-11-2015 |
| | | | WO | 2015143250 A1 | 24-09-2015 |
| US 2012286725 | A1 | 15-11-2012 | CN | 102778866 A | 14-11-2012 |
| | | | US | 2012286725 A1 | 15-11-2012 |
| US 2019389314 | A1 | 26-12-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9043038 B2
- DE 102021105460 A1
- DE 102018207043 A1
- FR 3122951 A1
- US 2022410750 A1
- EP 2465177 B1
- WO 2020260615 A1

**Non-patent literature cited in the description**

- **A. S. AL-OGAILI et al.** Review on Scheduling, Clustering, and Forecasting Strategies for Controlling Electric Vehicle Charging: Challenges and Recommendations. *IEEE Access*, 2019, vol. 7, 128353-128371
- **M. M. HOQUE** ; **M. KHORASANY** ; **R. RAZZAGHI** ; **M. JALILI** ; **H. WANG**. Network-Aware Coordination of Aggregated Electric Vehicles Considering Charge-Discharge Flexibility. *IEEE Transactions on Smart Grid*, May 2023, vol. 14 (3), 2125-2139
- **M. SECCHI** ; **G. BARCHI** ; **D. MACII** ; **D. PETRI**. Smart electric vehicles charging with centralised vehicle-to-grid capability for net-load variance minimisation under increasing EV and PV penetration levels. *Sustainable Energy, Grids and Networks*, September 2023, vol. 35, 101120